# EUROPÄISCHE PATENTSCHRIFT

(11) **EP 3 658 336 B1**
(45) Veröffentlichungstag und Bekanntmachung des Hinweises auf die Patenterteilung: **30.06.2021**
(21) Anmeldenummer: 18739563.7
(22) Anmeldetag: 18.07.2018
(51) Int. Cl.: B25F 5/02, B25H 3/00

(54) **HAKENHALTERUNG FÜR EINE WERKZEUGMASCHINE**
HOOK HOLDER FOR A MACHINE TOOL
DISPOSITIF DE RETENU À CROCHETS POUR UNE MACHINE-OUTIL

(30) Priorität: 28.07.2017 EP 17183670
(43) Veröffentlichungstag der Anmeldung: 03.06.2020
(73) Patentinhaber: Hilti Aktiengesellschaft, 9494 Schaan (LI)
(72) Erfinder: ZHOU, Xi, 86916 Kaufering (DE); HAAS, Günter, 86916 Kaufering (DE); BAXIVANELIS, Konstantin, 86916 Kaufering (DE)
(74) Vertreter: Hilti Aktiengesellschaft Corporate Intellectual Property
(86) Internationale Anmeldenummer: PCT/EP2018/069504
(87) Internationale Veröffentlichungsnummer: WO 2019/020456

(56) Entgegenhaltungen:
- EP-A1- 1 645 372
- DE-A1- 19 906 680
- US-A1- 2005 072 822
- US-A1- 2006 022 002
- US-A1- 2015 040 408

## Beschreibung

Die vorliegende Erfindung betrifft eine Werkzeugmaschine mit einer Haltevorrichtung zum lösbaren Anbringen an ein Werkzeugmaschinengehäuse einer Werkzeugmaschine und zum Aufnehmen eines Hakens zum Aufhängen der Werkzeugmaschine an dem Haken.

Insbesondere betrifft die vorliegende Erfindung eine Werkzeugmaschine mit einer Haltevorrichtung zum lösbaren Anbringen an ein Werkzeugmaschinengehäuse der Werkzeugmaschine und zum Aufnehmen eines Hakens zum Aufhängen der Werkzeugmaschine an dem Haken, wobei die Haltevorrichtung einen Befestigungsabschnitt zum Befestigen der Haltevorrichtung an dem Werkzeugmaschinengehäuse, eine Sicherungseinrichtung zum Sichern der Haltevorrichtung an dem Werkzeugmaschinengehäuse und einen eine Öffnung aufweisenden Aufnahmeabschnitt zum Aufnehmen und drehbaren Lagern eines Einführabschnitts des Hakens umfasst, wobei der Aufnahmeabschnitt eine axiale Richtung definiert.

Das Werkzeugmaschinengehäuse von Werkzeugmaschinen, wie Kreissägen oder Winkelschleifer, ist häufig mit einem Haken ausgestattet, um die Werkzeugmaschine an einem Gerüst oder einer Werkbank aufhängen zu können. Dazu wird der Haken einer Werkzeugmaschine üblicherweise von einer fest mit dem Werkzeugmaschinengehäuse verbundenen Haltevorrichtung derart gehalten, dass der Haken zwischen einer ausgeklappten Position und einer eingeklappten Position schwenkbar ist. In der ausgeklappten Position des Hakens kann die Werkzeugmaschine an dem Haken gehalten werden und in der eingeklappten Position des Hakens liegt der Haken an dem Werkzeugmaschinengehäuse an, damit der Haken eine Bedienperson beim Gebrauch der Werkzeugmaschine nicht behindert. Nun kann durch eine Stoßeinwirkung, etwa durch ein versehentliches Herunterfallen der Werkzeugmaschine, die Haltevorrichtung des Hakens oder der Haken selbst beschädigt werden, so dass das entsprechende Bauteil ausgetauscht werden muss. Ein Austausch der Haltevorrichtung oder des Hakens ist jedoch meist umständlich und zeitraubend.

Aus der DE 199 06 680 A1 ist eine Vorrichtung zum Auf- oder Anhängen einer Elektrohandwerkzeugmaschine und aus der US 2015/040 408 A1 ist eine zweiachsige Hakenvorrichtung für eine Werkzeugmaschine bekannt.

Es ist die Aufgabe der vorliegenden Erfindung, eine Werkzeugmaschine mit einer Haltevorrichtung zum lösbaren Anbringen an ein Werkzeugmaschinengehäuse der Werkzeugmaschine und zum Aufnehmen eines Hakens zum Aufhängen der Werkzeugmaschine an dem Haken bereitzustellen, welche ein erleichtertes und schnelleres Austauschen des Hakens ermöglicht und auch selbst auf eine einfache und rasche Weise austauschbar ist.

Es wird eine Werkzeugmaschine mit einem Haltesystem zum Halten der Werkzeugmaschine mit einer Haltevorrichtung und einem einen Einführabschnitt aufweisenden Haken vorgeschlagen, wobei der Einführabschnitt des Hakens in den Aufnahmeabschnitt der Haltevorrichtung einsetzbar ist, wobei die Haltevorrichtung umfasst:
einen Befestigungsabschnitt zum Befestigen der Haltevorrichtung an dem Werkzeugmaschinengehäuse,
eine Sicherungseinrichtung zum Sichern der Haltevorrichtung an dem Werkzeugmaschinengehäuse, und
einen eine Öffnung aufweisenden Aufnahmeabschnitt zum Aufnehmen und drehbaren Lagern eines Einführabschnitts des Hakens, wobei der Aufnahmeabschnitt eine axiale Richtung definiert, und wobei der Befestigungsabschnitt erste Formschlussmittel aufweist, welche dazu eingerichtet sind, mit an dem Werkzeugmaschinengehäuse bereitgestellten ersten Gegenformschlussmitteln in Eingriff zu kommen, wobei der Formschluss zwischen den ersten Formschlussmitteln und den ersten Gegenformschlussmitteln eine Bewegung der Haltevorrichtung entlang einer Gleitrichtung ermöglicht und eine Bewegung senkrecht zur Gleitrichtung verhindert, und dass die Sicherungseinrichtung zwischen einer Öffnungsstellung und einer Verriegelungsstellung beweglich ist, wobei die Sicherungseinrichtung dazu eingerichtet ist, eine Bewegung der Haltevorrichtung entlang der Gleitrichtung in der Verriegelungsstellung zu verhindern und in der Öffnungsstellung zu ermöglichen, und wobei der Einführabschnitt des Hakens in den Aufnahmeabschnitt der Haltevorrichtung einsetzbar ist, und wobei das Haltesystem ferner eine mit dem Aufnahmeabschnitt der Haltevorrichtung zusammenwirkende erste Rasteinrichtung zum Definieren einer Drehposition des Hakens relativ zur Haltevorrichtung umfasst, wobei die erste Rasteinrichtung dazu eingerichtet ist, drehfest mit dem Einführabschnitt des Hakens koppelbar zu sein.

Erfindungsgemäß ist vorgesehen, dass die erste Rasteinrichtung wenigstens eine Federanordnung und der Aufnahmeabschnitt wenigstens eine Vertiefung aufweist, wobei die wenigstens eine Federanordnung dazu eingerichtet ist, mit der wenigstens einen Vertiefung in dem Aufnahmeabschnitt in Eingriff zu kommen.

Die Haltevorrichtung gemäß der vorliegenden Erfindung kann somit sicher, aber schnell lösbar an dem Werkzeugmaschinengehäuse befestigt werden. Zum formschlüssigen Koppeln der Haltevorrichtung mit dem Werkzeugmaschinengehäuse sind die Haltevorrichtung und das Werkzeugmaschinengehäuse derart geformt, dass die Haltevorrichtung entlang der Gleitrichtung in das Werkzeugmaschinengehäuse eingeschoben oder an das Werkzeugmaschinengehäuse aufgeschoben werden kann. Das Werkzeugmaschinengehäuse kann etwa eine zum Aufnehmen der Haltevorrichtung vorgesehenen Nut aufweisen. Durch Bewegen der Haltevorrichtung entgegen der Einführrichtung kann die Haltevorrichtung auch wieder von dem Werkzeugmaschinengehäuse getrennt werden. Um im Gebrauch der Werkzeugmaschine zu verhindern, dass sich die mit dem Werkzeugmaschinengehäuse gekoppelte Haltevorrichtung wieder von dem Werkzeugmaschinengehäuse löst, ist an der Haltevorrichtung eine Sicherungseinrichtung vorgesehen, welche eine Bewegung der Haltevorrichtung entgegen der Gleitrichtung blockieren kann. Genauer wird die mit dem Werkzeugmaschinengehäuse gekoppelte Haltevorrichtung von der Sicherungseinrichtung in der Verriegelungsstellung der Sicherungseinrichtung an dem Werkzeugmaschinengehäuse befestigt und in der Öffnungsstellung zum Bewegen entlang der Gleitrichtung freigegeben.

Die Gleitrichtung der Haltevorrichtung wird von den ersten Formschlussmitteln der Haltevorrichtung und den ersten Gegenformschlussmitteln des Werkzeugmaschinengehäuses definiert. Die ersten Formschlussmittel der Haltevorrichtung und die ersten Gegenformschlussmittel des Werkzeugmaschinengehäuses bilden zusammen vorzugsweise eine Lineargleitführung. Generell können die ersten Formschlussmittel oder die ersten Gegenformschlussmitteln eine Hinterschneidung, etwa eine schwalbenschwanzförmige Hinterschneidung, aufweisen, um eine Bewegung der mit dem Werkzeugmaschinengehäuse gekoppelten Haltevorrichtung senkrecht zur Gleitrichtung zu unterbinden.

Vorzugsweise ist die erste Rasteinrichtung dazu eingerichtet, drehfest mit dem Einführabschnitt des Hakens koppelbar zu sein. Beispielsweise kann die erste Rasteinrichtung einen hülsenförmigen Grundkörper aufweisen, welcher auf den Einführabschnitt des Hakens aufschiebbar ist. Zum axialen und radialen Befestigen des Grundkörpers an dem Haken kann der Grundkörper zwei sich radial gegenüberliegende Löcher und der Haken eine sich radial durch den Einführabschnitt erstreckende Bohrung aufweisen, in welche ein Stift einsetzbar ist. Durch Entfernen des Stifts kann der Haken auf einfache und schnelle Weise aus dem Aufnahmeabschnitt der Haltevorrichtung gezogen werden.

Die Gleitrichtung kann im Wesentlichen senkrecht zu der von dem Aufnahmeabschnitt definierten axialen Richtung verlaufen. Des Weiteren kann der Befestigungsabschnitt neben dem Aufnahmeabschnitt angeordnet sein, z.B. in der Gleitrichtung gesehen.

Bei einer bevorzugten Ausführungsform umfasst der Befestigungsabschnitt eine Durchgangsöffnung und die Sicherungseinrichtung ein Betätigungselement. Das Betätigungselement kann ein erstes Ende und einen sich vom ersten Ende erstreckenden ersten Endabschnitt sowie ein zweites Ende und einen sich vom zweiten Ende erstreckenden zweiten Endabschnitt aufweisen. Der erste Endabschnitt des Betätigungselements kann fest mit der Haltevorrichtung, insbesondere dem Befestigungsabschnitt koppelbar sein.

Der Befestigungsabschnitt kann ein die ersten Formschlussmittel aufweisenden Kopplungsteil und einen vom Kopplungsteil auskragenden Arm umfassen. Der erste Endabschnitt des Betätigungselements ist vorzugsweise fest mit dem Arm koppelbar. Weiter ist es bevorzugt, dass der Arm relativ zum Kopplungsteil beweglich bzw. federnd an dem Kopplungsteil angeordnet ist. Der Kopplungsteil kann zudem die Durchgangsöffnung des Betätigungselements aufweisen.

Im Fall einer Schwalbenschwanzverbindung zwischen Haltevorrichtung und Werkzeugmaschinengehäuse kann zumindest ein Bereich des Kopplungsteils des Befestigungsabschnitts einen trapezförmigen Querschnitt haben und eine ebene Oberseite, eine ebene Unterseite und eine die Oberseite mit der Unterseite verbindende Seitenwand aufweisen, wobei dann die Seitenwand des Kopplungsteils, zumindest abschnittsweise an sich gegenüberliegenden Seiten, die ersten Formschlussmittel aufweist oder bildet. Der Kopplungsteil kann in einer in dem Werkzeugmaschinengehäuse vorgesehenen Nut mit trapezförmigem Querschnitt aufgenommen sein, deren Umfangswandung, zumindest abschnittsweise an sich gegenüberliegenden Seiten, die zweiten Formschlussmittel bildet oder aufweist.

Der zweite Endabschnitt des Betätigungselements kann dazu eingerichtet sein, in die Durchgangsöffnung des Befestigungsabschnitts zu ragen. Insbesondere kann das zweite Ende des Betätigungselements in der Verriegelungsstellung der Sicherungseinrichtung über den Befestigungsabschnitt hervorstehen und in der Öffnungsstellung der Sicherungseinrichtung innerhalb der Durchgangsöffnung des Befestigungsabschnitts angeordnet sein.

In dem Fall, dass die erste Rasteinrichtung einen hülsenförmigen Grundkörper umfasst, kann der Grundkörper wenigstens einen elastischen Abschnitt aufweisen, welcher durch Weglassen von Grundkörpermaterial während des Herstellens des Grundkörpers oder durch Entfernen von Grundkörpermaterial nach dem Herstellen des Grundkörpers gebildet werden können. Der wenigstens eine elastische Abschnitt bildet vorzugsweise die wenigstens eine Federanordnung der ersten Rasteinrichtung.

Der Grundkörper kann auch jeweils eine Tasche für eine Federanordnung umfassen. Die wenigstens eine Federanordnung kann integral mit dem hülsenförmigen Grundkörper ausgebildet sein, kann aber auch in eine entsprechende einsetzbar sein. Die wenigstens eine Federanordnung kann an eine in axialer Richtung oder in Umfangsrichtung verlaufende Seite der entsprechenden Tasche in dem hülsenförmigen Grundkörper schwenkbar angeformt sein, so dass die Federanordnung relativ zu der dieser Seite gegenüberliegenden Seite der Tasche beweglich ist. Die wenigstens eine Federanordnung kann z.B. eine band- oder drahtförmige Struktur aufweisen, welche labyrinthförmig, mäanderförmig, rechteckförmig oder von einer anderweitig gebogenen Form sein kann.

Jede Federanordnung ist derart in dem hülsenförmigen Grundkörper angeordnet, dass die Federanordnung über den Grundkörper hinausragt, um in die wenigstens eine Vertiefung in dem Aufnahmeabschnitt eingreifen zu können. Zum Eingreifen in die wenigstens eine Vertiefung in dem Aufnahmeabschnitt kann die wenigstens eine Federanordnung ein entsprechendes Formschlussmittel, z.B. in Form einer Rastnase, aufweisen.

Für ein gleichmäßiges Abstützen der ersten Rasteinrichtung an dem Aufnahmeabschnitt weist die erste Rasteinrichtung bevorzugt genau zwei einander radial gegenüberliegende Federanordnungen auf. Der Aufnahmeabschnitt hat dann wenigstens zwei oder eine andere gerade Anzahl an Vertiefungen. Bei einer Mehrzahl an Federanordnungen sind diese bevorzugt symmetrisch um eine Umfangswand des Grundkörpers der ersten Rasteinrichtung verteilt. Eine unsymmetrische Verteilung ist natürlich auch möglich. Die Federanordnungen der ersten Rasteinrichtung sind vorzugsweise identisch ausgestaltet.

Das Haltesystem kann ferner wenigstens eine mit dem Einführabschnitt des Hakens zusammenwirkende zweite Rasteinrichtung mit zweiten Formschlussmitteln zum Definieren einer Drehposition des Hakens relativ zur Haltevorrichtung umfassen. Dazu kann der Aufnahmeabschnitt der Haltevorrichtung wenigstens eine sich entlang einer Innenfläche der Öffnung des Aufnahmeabschnitts axial erstreckende Vertiefung aufweisen, in welche die wenigstens eine zweite Rasteinrichtung einsetzbar ist. Die wenigstens eine zweite Rasteinrichtung kann derart eingerichtet sein, dass die zweiten Formschlussmittel mit an einer Außenseite des Einführabschnitts des Hakens bereitgestellten zweiten Gegenformschlussmitteln in Eingriff bringbar sind.

Bei einer bevorzugten Ausführungsform weist die wenigstens eine zweite Rasteinrichtung einen ersten Schenkel und einen zweiten Schenkel auf, welche an einem ihrer Enden über einen Verbindungsabschnitt miteinander verbunden sind. Ein dem Verbindungsabschnitt gegenüberliegendes freies Ende des ersten Schenkels kann die zweiten Formschlussmittel aufweisen. Beispielsweise können die zweiten Formschlussmittel eine halbkugelförmige Erhebung des ersten Schenkels und die zweiten Gegenformschlussmittel des Hakens komplementär zu den zweiten Formschlussmitteln geformte halbkreisförmige Vertiefungen im Einführabschnitt des Hakens sein. Bevorzugt sind der erste Schenkel und der zweite Schenkel der zweiten Rasteinrichtung senkrecht zu ihrer Erstreckungsrichtung relativ zueinander beweglich. Mit anderen Worten ist die zweite Rasteinrichtung vorzugsweise federnd ausgestaltet.

Die Bauteile des Haltesystems können aus Kunststoff, vorzugsweise Polyamid, gefertigt sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: ein an einem Werkzeugmaschinengehäuse befestigtes Haltesystem gemäß der vorliegenden Erfindung in einer Ansicht
- Fig. 2A: das Haltesystem von Fig. 1 mit einem gegenüber der Position in Fig. 1 um 180° gedrehten Haken;
- Fig. 2B: das Haltesystem der Fig. 1 von schräg unten und mit einem gegenüber der Position in Fig. 1 um 180° gedrehten Haken;

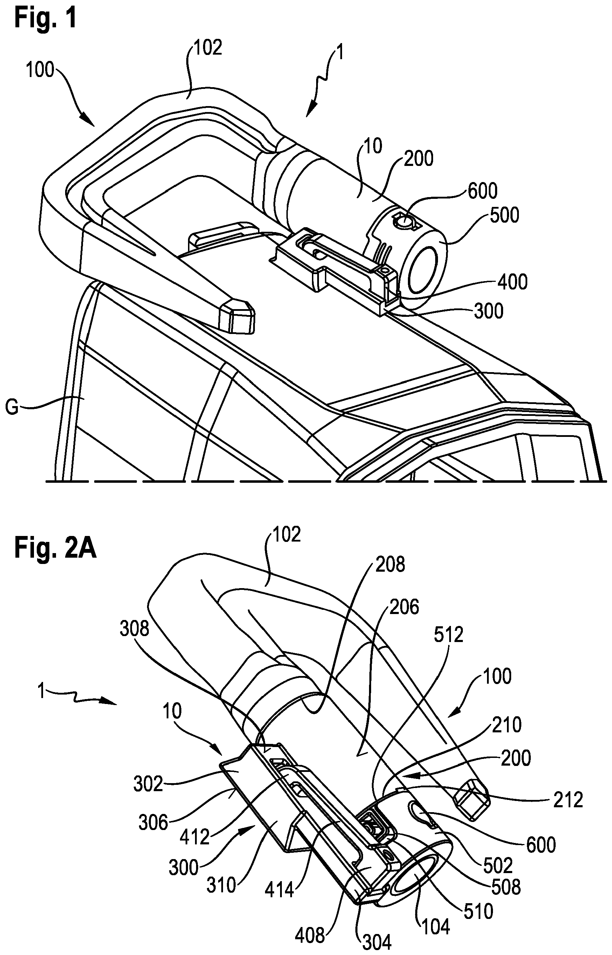

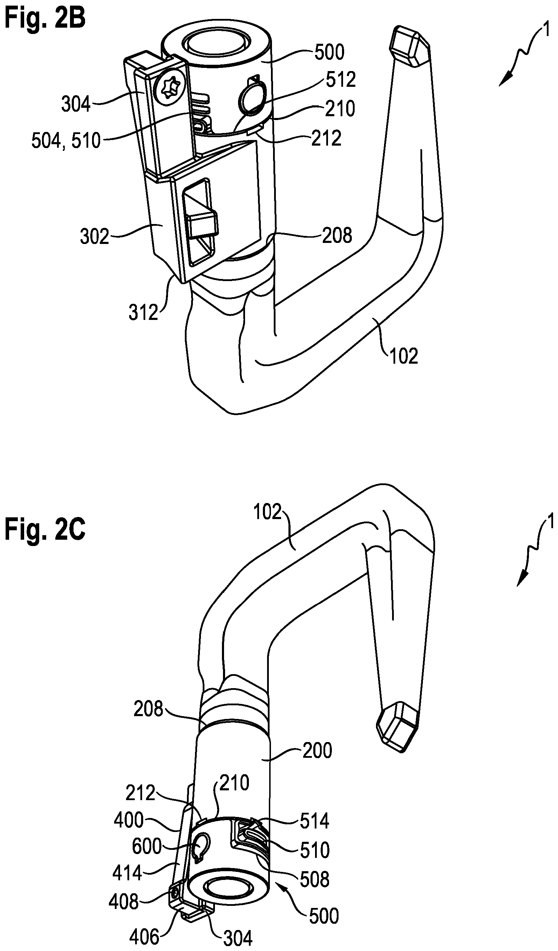

- Fig. 2B: das Haltesystem der Fig. 1 in einer Seitenansicht und mit einem gegenüber der Position in Fig. 1 um 180° gedrehten Haken;

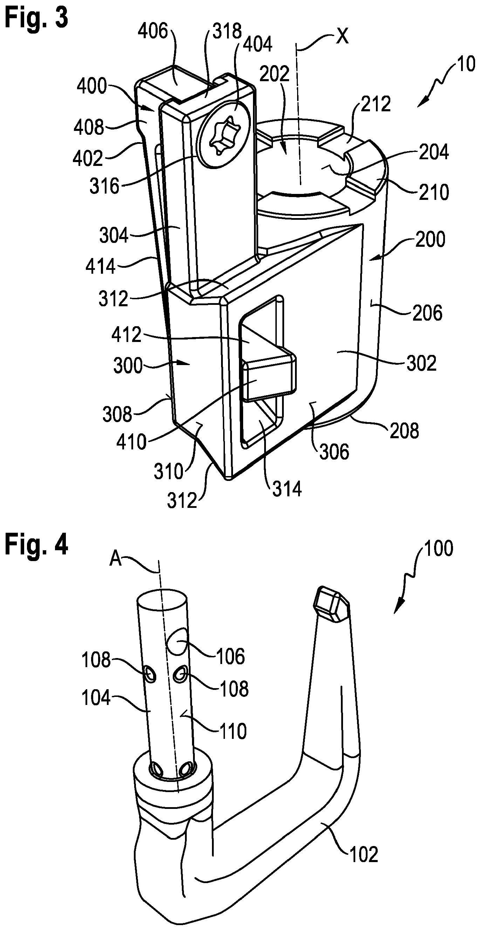

- Fig. 3: die Haltevorrichtung von Fig. 1;
- Fig. 4: ein Haken zum Einsetzen in die Haltevorrichtung von Fig. 1;

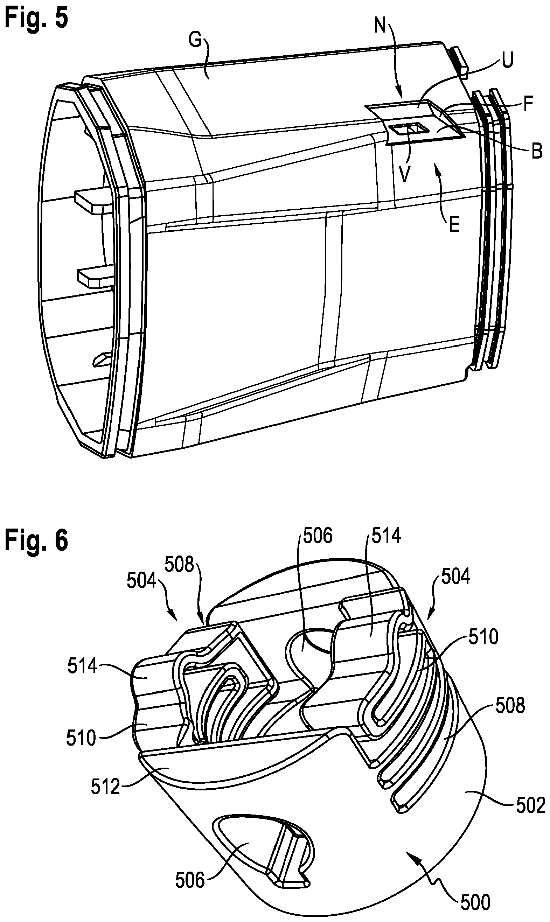

- Fig. 5: ein Werkzeugmaschinengehäuse für die Haltevorrichtung von Fig. 1;
- Fig. 6: eine erste Rasteinrichtung mit zwei Federanordnungen für ein Haltesystem gemäß der vorliegenden Erfindung;

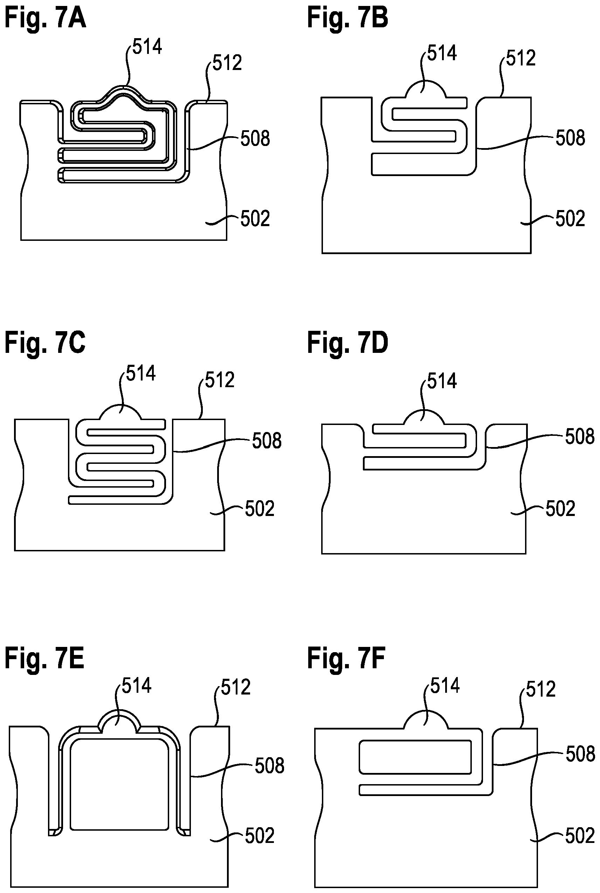

- Fig. 7A-F: verschiedene Ausgestaltungen einer Federanordnung der ersten Rasteinrichtung von Fig. 6;

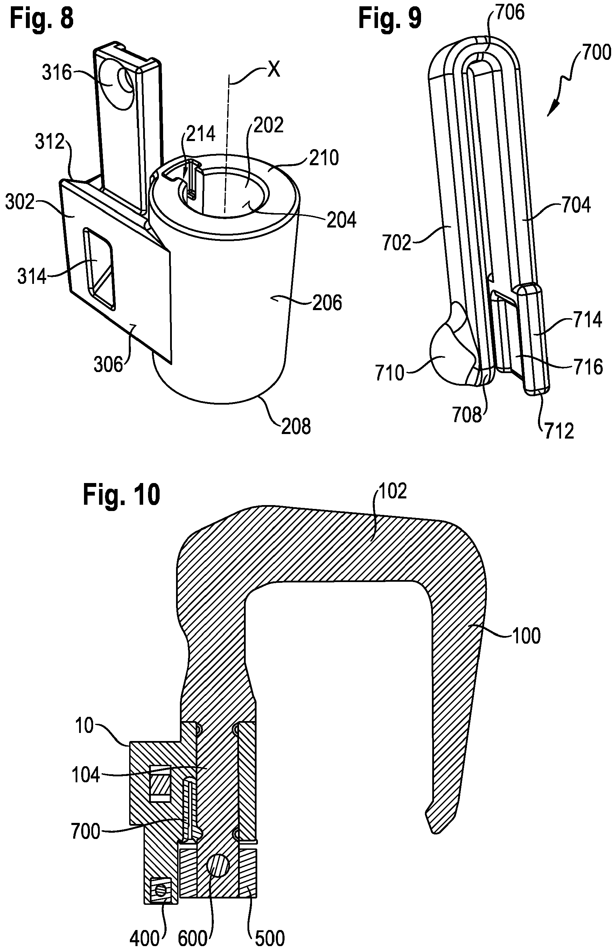

- Fig. 8: eine Haltevorrichtung gemäß einer zweiten Ausführungsform der vorliegenden Erfindung ohne die Sicherungseinrichtung;
- Fig. 9: eine zweite Rasteinrichtung zum Verwenden mit der Haltevorrichtung von Fig. 8;
- Fig. 10: eine Schnittansicht durch eine Haltevorrichtung mit einer zweiter Rasteinrichtung.

### Ausführungsbeispiele:

Fig. 1 zeigt ein an einem Werkzeugmaschinengehäuse G einer Werkzeugmaschine befestigtes Haltesystem 1 mit einer Haltevorrichtung 10 gemäß der vorliegenden Erfindung. Das Haltesystem 1 bzw. die Haltevorrichtung 10 dient zum Halten eines Hakens 100 mit einem U-förmigen Halteabschnitt 102 und einem zylindrischen Einführabschnitt 104 (Fig. 4). Die Werkzeugmaschine kann z.B. eine Kreissäge oder ein Winkelschleifer sein.

Die Fig. 2A/B/C zeigen verschiedene Ansichten des erfindungsgemäßen Haltesystems 1.

In Fig. 3 ist die erfindungsgemäße Haltevorrichtung 10 dargestellt. Die Haltevorrichtung 10 umfasst einen Aufnahmeabschnitt 200, einen Befestigungsabschnitt 300 und eine Sicherungseinrichtung 400.

Der Aufnahmeabschnitt 200 ist hohlzylindrisch mit einer Öffnung 202 und definiert eine Innenfläche 204 und eine Außenfläche 206. Die Öffnung 202 erstreckt sich entlang einer axialen Richtung X durch den gesamten Aufnahmeabschnitt 200 hindurch und ist dazu vorgesehen, den Einführabschnitt 104 des Hakens 100 aufzunehmen. Des Weiteren definiert der Aufnahmeabschnitt 200 ein erstes Ende 208 und ein dem ersten Ende 208 in der axialen Richtung X gegenüberliegendes zweites Ende 210. Der Einführabschnitt 104 des Hakens 100 wird vom ersten Ende 208 des Aufnahmeabschnitts 200 her in die Öffnung 202 eingeführt. In seiner in den Aufnahmeabschnitt 200 eingesteckten Position ist der Einführabschnitt 104 konzentrisch zum Aufnahmeabschnitt 200. Somit ist eine Längsachse A des Einführabschnitts 104 parallel zur axialen Richtung X.

Der Befestigungsabschnitt 300 weist einen im Wesentlichen rechteckigen Kopplungsteil 302 und einen in axialer Richtung X von dem Kopplungsteil 302 auskragenden Arm 304 auf. Der Kopplungsteil 302 ist an den Aufnahmeabschnitt 200 an dessen Außenfläche 206 angeformt. Im dargestellten Ausführungsbeispiel sind der Kopplungsteil 302 und der Aufnahmeabschnitt 200 sowie der Kopplungsteil 302 und der Arm 304 einstückig miteinander ausgebildet, können jedoch selbstverständlich auch auf andere Weise miteinander verbunden oder verbindbar sein.

Der Kopplungsteil 302 weist eine ebene Unterseite 306, eine zur Unterseite 306 parallele ebene Oberseite 308 sowie eine die Unterseite 306 und die ebene Oberseite 308 miteinander verbindende Seitenwand 310 auf. Ein unterer Bereich des Kopplungsteils 302 weist, bezogen auf einen Schnitt senkrecht zur Unterseite 306 und parallel zur axialen Richtung X, einen trapezförmigen Querschnitt auf. Hier bilden die sich gegenüberliegenden und im Wesentlichen senkrecht zur axialen Richtung X erstreckenden Seiten der Seitenwand 310 einen spitzen Winkel mit der Unterseite 306. Diese Abschnitte der Seitenwand 310 bilden erste Formschlussmittel 312.

Wie in Fig. 5 dargestellt, umfasst das Werkzeugmaschinengehäuse G einer Werkzeugmaschine eine Nut N mit einer Bodenfläche B und einer Umfangswandung U. In der Bodenfläche B der Nut N ist eine Vertiefung V vorgesehen. Die Umfangswandung U der Nut N ist komplementär zu den ersten Formschlussmitteln 312 des Kopplungsteils 302 geformt und bildet somit, zumindest abschnittsweise, erste Gegenformschlussmittel F des Werkzeugmaschinengehäuses G. Auf diese Weise wird eine Gleitrichtung E definiert, entlang derer die Haltevorrichtung 10 in die Nut N im Werkzeugmaschinengehäuse G eingeschoben wird. Die Gleitrichtung E verläuft im Wesentlichen senkrecht zur axialen Richtung X. Ist der Kopplungsteil 302 in der Nut N aufgenommen, liegt die Unterseite 306 des Kopplungsteils 302 an der Bodenfläche B der Nut N an.

Der Kopplungsteil 302 weist außerdem eine mit der Sicherungseinrichtung 400 zusammenwirkende Durchgangsöffnung 314 auf. Die Durchgangsöffnung 314 erstreckt sich im Wesentlichen senkrecht zur axialen Richtung X und zur Gleitrichtung E.

Der Arm 304 kragt von dem Kopplungsteil 302 in axialer Richtung X aus. Im dargestellten Ausführungsbeispiel ragt der Arm 304 über das zweite Ende 210 des Aufnahmeabschnitts 200 hinaus. Bezogen auf eine Richtung senkrecht zur Unterseite 306 des Kopplungsteils 302 ist der Arm 302 von der Unterseite 306 des Kopplungsteils 302 beabstandet. Diese Anbindung des Arms 304 an den Kopplungsteil 302 ermöglicht eine Schwenkbewegung des Arms 304 relativ zum Kopplungsteil 302, wobei die entsprechende Schwenkachse senkrecht zur axialen Richtung X und parallel zur Unterseite 306 des Kopplungsteils 302 verläuft.

Die Sicherungseinrichtung 400 umfasst ein Betätigungselement 402 und ein Verbindungsmittel in Form einer Schraube 404. Das Betätigungselement 402 ist im Wesentlichen U-förmig mit einem ersten Ende 406 und einem sich daran anschließenden ersten Endabschnitt 408, einem zweiten Ende 410 und einem sich daran anschließenden keilförmigen zweiten Endabschnitt 412 sowie einem den ersten Endabschnitt 408 mit dem zweiten Endabschnitt 412 verbindenden länglichen Mittelsteg 414.

Wie besonders gut aus Fig. 2B und 3 hervorgeht, ist das Betätigungselement 402 mit dem Arm 304 dadurch verbunden, dass die Schraube 404 durch ein Loch 316 (Fig. 8) am freien Ende 318 des Arms 304 geführt und mit dem Betätigungselement 402 verschraubt ist. Natürlich können anstelle einer Schraubverbindung auch andere Verbindungsarten zum Einsatz kommen. Des Weiteren kann die Sicherungseinrichtung 400 bzw. das Betätigungselement 402 auch einstückig mit dem Befestigungsabschnitt 300 bzw. dem Arm 304 ausgebildet sein.

Im montierten Zustand der Sicherungseinrichtung 400 an dem Befestigungsabschnitt 300 erstreckt sich der Mittelsteg 414 des Betätigungselements 402 entlang der axialen Richtung X. Ist die Sicherungseinrichtung 400 unbetätigt, befindet sich die Sicherungseinrichtung 400 in der Verriegelungsstellung. Dabei taucht der zweite Endabschnitt 412 des Betätigungselements 402 in die Durchgangsöffnung 314 des Kopplungsteils 302 ein und ragt über die Unterseite 306 des Kopplungsteils 302 hinaus, so dass der zweite Endabschnitt 412 in Eingriff mit der Vertiefung V im Werkzeugmaschinengehäuse G ist. Der zweite Endabschnitt 412 des Betätigungselements 402 weist folglich eine Länge auf, die größer ist als der Abstand zwischen der Unterseite 306 und der Oberseite 308 des Kopplungsteils 302.

Durch Betätigen des Betätigungselements 402, etwa durch Anheben des Betätigungselements 402 im Bereich des zweiten Endabschnitts 412 oder durch Herunterdrücken des Betätigungselements 402 mitsamt des Arms 304 im Bereich des ersten Endabschnitts 408, kann die Sicherungseinrichtung 400 in die Öffnungsstellung bewegt werden, so dass der zweite Endabschnitt 412 des Betätigungselements 402 angehoben und aus der Vertiefung V in dem Werkzeugmaschinengehäuse G heraus gebracht wird. Wird das Einwirken auf das Betätigungselement 402 beendet, bewegt sich die Sicherungseinrichtung 400 wieder in die Verriegelungsstellung.

Das in den Fig. 2A/B/C gezeigte Haltesystem 1 umfasst ferner eine erste Rasteinrichtung 500. Die erste Rasteinrichtung 500 ist in Fig. 6 dargestellt und 500 umfasst einen hülsenförmigen Grundkörper 502 mit zwei elastischen Abschnitten 504.

Ein Herausgleiten des Hakens 100 aus dem Aufnahmeabschnitt 200 wird dadurch verhindert, dass die erste Rasteinrichtung 500 auf den Einführabschnitt 104 des Hakens 100 aufgeschoben und mit einem sich radial durch die erste Rasteinrichtung 500 und den Einführabschnitt 104 erstreckenden Stift 600 gesichert wird. Dazu weist der Einführabschnitt 104 eine radiale Bohrung 106 und der Grundkörper 502 zwei sich radial gegenüberliegende Löcher 506 auf, in welche der Stift 600 gesteckt werden kann.

Die elastischen Abschnitte 504 des Grundkörpers 502 sind dadurch gebildet, dass der Grundkörper 502 an sich radial gegenüberliegenden Seiten jeweils eine Tasche 508 mit darin angeordneter Federanordnung 510 aufweist. Die beiden Federanordnungen 510 stehen über einen dem zweiten Ende 210 des Aufnahmeabschnitts 200 in axialer Richtung X gegenüberliegenden Rand 512 des Grundkörpers 502 hervor. Die beiden in Fig. 6 gezeigten Federanordnungen 510 haben eine mäandernde bandförmige Struktur.

Eine Federanordnung 510 für die ersten Rasteinrichtung 500 kann unterschiedlich ausgestaltet sein, wobei es jedoch bevorzugt ist, wenn alle Federanordnungen 510 einer ersten Rasteinrichtung 500 die gleiche Form haben. In den Fig. 7A bis 7F sind unterschiedliche Formen einer Federanordnung 510 exemplarisch dargestellt. In den Beispielen der Fig. 7A bis 7F sind die Federanordnungen 510 stets einstückig mit dem Grundkörper 502 gebildet. Zudem weisen die dargestellten Federanordnungen 510 jeweils eine Rastnase 514 auf. Die Gestaltung der Federanordnungen 510 ist jedoch nicht auf diese Beispiele beschränkt.

Wie aus Fig. 3 ersichtlich, ist am zweiten Ende 210 des Aufnahmeabschnitts 200 eine Mehrzahl an Ausnehmungen 212 vorgesehen, in welche die beiden Federanordnungen 510, insbesondere die Rastnasen 514, eingreifen können. Das zweite Ende 210 des Aufnahmeabschnitts 200 kann beispielsweise vier oder acht symmetrisch um die Öffnung 202 des Aufnahmeabschnitts 200 angeordnete Ausnehmungen 212 umfassen.

Wird der in dem Aufnahmeabschnitt 200 eingesetzte Haken 100 um die Längsachse A gedreht, dreht sich die erste Rasteinrichtung 500 aufgrund der über den Stift 600 bewirkten Kopplung zwischen dem Haken 100 und der ersten Rasteinrichtung 500 entsprechend mit. Auf diese Weise können die beiden Federanordnungen 510 außer Eingriff mit den Ausnehmungen 212 am zweiten Ende 210 des Aufnahmeabschnitts 200 kommen und von dem Rand 512 des Grundkörpers 502 in ihre jeweilige Tasche 508 gedrückt werden. Werden die beiden Federanordnungen 510 bis zu einer nächsten Ausnehmung 212 weitergedreht, entspannen sich die beiden Federanordnungen 510 und tauchen in die Ausnehmungen 212 ein, wodurch eine Drehposition des Hakens 100 definiert wird.

Die zum Überwinden einer Ausnehmung 212 zusätzlich erforderliche Kraft ist für eine Bedienperson spürbar. Befindet sich der Haken 100 in einer gewünschten Drehposition relativ zur Haltevorrichtung 10, kann die Bedienperson den Haken 100 loslassen und der Haken 100 wird durch das Zusammenwirken zwischen den Ausnehmungen 212 und den beiden Federanordnungen 510 in der eingestellten Drehposition gehalten.

Wie in Fig. 8 ersichtlich, kann der Aufnahmeabschnitt 200 zusätzlich mit wenigstens einer sich in axialer Richtung X erstreckenden Vertiefung 214 versehen sein, die zur Innenfläche 204 der Öffnung 202 des Aufnahmeabschnitts 200 hin offen ist. In die Vertiefung 214 ist eine in Fig. 9 dargestellte zweite Rasteinrichtung 700 einsetzbar. Der Übersichtlichkeit halber ist in Fig. 8 die Haltevorrichtung 10 ohne die Sicherungseinrichtung 400 gezeigt. Der Aufnahmeabschnitt 200 kann auch zwei oder mehr solcher Vertiefungen 214 umfassen, in welchen jeweils eine zweite Rasteinrichtungen 700 aufnehmbar ist.

Die zweite Rasteinrichtung 700 ist gabelförmig und weist einen ersten Schenkel 702 und einen zweiten Schenkel 704 auf, welche an einem ihrer Enden über einen Verbindungsabschnitt 706 miteinander verbunden sind. Der Abstand zwischen den sich gegenüberliegenden ersten und zweiten Schenkeln 702, 704 liegt in der Größenordnung der Dicke eines der beiden Schenkel 702, 704, wobei die Dicke des ersten und zweiten Schenkels 702, 704 im dargestellten Ausführungsbeispiel im Wesentlichen gleich ist.

An dem dem Verbindungsabschnitt 706 gegenüberliegenden freien Ende 708 des ersten Schenkels 702 befinden sich zweite Formschlussmittel 710 in Form einer halbkugelförmigen Erhebung. An dem dem Verbindungsabschnitt 706 gegenüberliegenden freien Ende 712 des zweiten Schenkels 704 weist der zweite Schenkel 704 einen im Vergleich zum restlichen zweiten Schenkel 704 verbreiterten Abschnitt 714 mit einer Vertiefung 716 auf, in welche das freie Ende 708 des ersten Schenkels 702 eintauchen kann, wenn die beiden Schenkel 702, 704 aufeinander zubewegt werden, z.B. indem das freie Ende 708 des ersten Schenkels 702 auf das freie Ende 712 des zweiten Schenkels 704 gedrückt wird. Fig. 10 zeigt eine Schnittansicht durch die Haltevorrichtung 10 mit der in die Vertiefung 214 der Aufnahmeabschnitt 200 eingesetzter zweiter Rasteinrichtung 700.

Die zweiten Formschlussmittel 710 sind dazu vorgesehen, in zu den zweiten Formschlussmitteln 710 komplementär geformten zweiten Gegenformschlussmitteln 108, also halbkreisförmige Vertiefungen in der Außenfläche 110 des Einführabschnitts 104 des Hakens 100 einzugreifen, wenn sich der Einführabschnitt 104 des Hakens 100 in der Öffnung 202 des Aufnahmeabschnitts 200 befindet. Die zweiten Gegenformschlussmitteln 108 verlaufen kreisförmig um den Einführabschnitt 104 des Hakens 100 und legen jeweils eine Drehposition des Hakens 100 relativ zur Haltevorrichtung 10 fest. Die Anzahl an zweiten Gegenformschlussmitteln 108 und der Abstand zwischen direkt benachbarten zweiten Gegenformschlussmitteln 108 kann auf die gewünschten Drehpositionen des Hakens 100 abgestimmt werden. Beispielsweise können vier zweite Gegenformschlussmittel 108 in gleichem Abstand kreisförmig um den Einführabschnitt 104 angeordnet sein.

Die zweite Rasteinrichtung 700 wird von der ersten Rasteinrichtung 500 gegen eine Bewegung in axialer Richtung X aus der Vertiefung 214 heraus gesichert.
- 316: Loch
- 318: Freies Ende
- 400: Sicherungseinrichtung
- 402: Betätigungselement
- 404: Schraube
- 406: Erstes Ende
- 408: Erster Endabschnitt
- 410: Zweites Ende
- 412: Zweiter Endabschnitt
- 414: Mittelsteg
- 500: Erste Rasteinrichtung
- 502: Grundkörper
- 504: Elastische Abschnitte
- 506: Löcher
- 508: Tasche
- 510: Federanordnung
- 512: Rand
- 514: Rastnase
- 600: Stift
- 700: Zweite Rasteinrichtung
- 702: Erster Schenkel
- 704: Zweiter Schenkel
- 706: Verbindungsabschnitt
- 708: Freies Ende
- 710: Zweite Formschlussmittel/Erhebung
- 712: Freies Ende
- 714: Verbreiterter Abschnitt
- 716: Vertiefung

## Patentansprüche

1. Werkzeugmaschine mit einem Haltesystem (1) zum Halten der Werkzeugmaschine mit einer Haltevorrichtung (10) und einem einen Einführabschnitt (104) aufweisenden Haken (100), wobei der Einführabschnitt (104) des Hakens (100) in den Aufnahmeabschnitt (200) der Haltevorrichtung (10) einsetzbar ist, wobei die Haltevorrichtung (10) umfasst:
einen Befestigungsabschnitt (300) zum Befestigen der Haltevorrichtung (10) an dem Werkzeugmaschinengehäuse (G),
eine Sicherungseinrichtung (400) zum Sichern der Haltevorrichtung (10) an dem Werkzeugmaschinengehäuse (G), und
einen eine Öffnung (202) aufweisenden Aufnahmeabschnitt (200) zum Aufnehmen und drehbaren Lagern eines Einführabschnitts (104) des Hakens (100), wobei der Aufnahmeabschnitt (200) eine axiale Richtung (X) definiert, und wobei der Befestigungsabschnitt (300) erste Formschlussmittel (312) aufweist, welche dazu eingerichtet sind, mit an dem Werkzeugmaschinengehäuse (G) bereitgestellten ersten Gegenformschlussmitteln (F) in Eingriff zu kommen, wobei der Formschluss zwischen den ersten Formschlussmitteln (312) und den ersten Gegenformschlussmitteln (F) eine Bewegung der Haltevorrichtung (10) entlang einer Gleitrichtung (E) ermöglicht und eine Bewegung senkrecht zur Gleitrichtung (E) verhindert, und dass die Sicherungseinrichtung (400) zwischen einer Öffnungsstellung und einer Verriegelungsstellung beweglich ist, wobei die Sicherungseinrichtung (400) dazu eingerichtet ist, eine Bewegung der Haltevorrichtung (10) entlang der Gleitrichtung (E) in der Verriegelungsstellung zu verhindern und in der Öffnungsstellung zu ermöglichen, und wobei das Haltesystem (1) ferner eine mit dem Aufnahmeabschnitt (200) der Haltevorrichtung (10) zusammenwirkende erste Rasteinrichtung (500) zum Definieren einer Drehposition des Hakens (100) relativ zur Haltevorrichtung (10) umfasst, wobei die erste Rasteinrichtung (500) dazu eingerichtet ist, drehfest mit dem Einführabschnitt (104) des Hakens (100) koppelbar zu sein, und wobei die erste Rasteinrichtung (500) wenigstens eine Federanordnung (510) und der Aufnahmeabschnitt (200) wenigstens eine Vertiefung (212) aufweist, wobei die wenigstens eine Federanordnung (510) dazu eingerichtet ist, mit der wenigstens einen Vertiefung (212) in dem Aufnahmeabschnitt (200) in Eingriff zu kommen.

2. Werkzeugmaschine nach Anspruch 1,
**dadurch gekennzeichnet, dass** die ersten Formschlussmittel (312) und die ersten Gegenformschlussmitteln (F) eine Schwalbenschwanzverbindung bilden.

3. Werkzeugmaschine nach Anspruch 1 oder 2,
**dadurch gekennzeichnet, dass** der Befestigungsabschnitt (300) eine Durchgangsöffnung (314) und die Sicherungseinrichtung (400) ein Betätigungselement (402) umfasst, wobei das Betätigungselement (402) ein erstes Ende (406) und einen sich vom ersten Ende (406) erstreckenden ersten Endabschnitt (408) sowie ein zweites Ende (410) und einen sich vom zweiten Ende (410) erstreckenden zweiten Endabschnitt (412) aufweist, wobei der erste Endabschnitt (408) des Betätigungselements (402) fest mit der Haltevorrichtung (10) koppelbar ist und der zweite Endabschnitt (412) des Betätigungselements (402) dazu eingerichtet ist, in die Durchgangsöffnung (314) des Befestigungsabschnitts (300) zu ragen, wobei das zweite Ende (410) des Betätigungselements (402) in der Verriegelungsstellung der Sicherungseinrichtung (400) über den Befestigungsabschnitt (300) hervorsteht und in der Öffnungsstellung der Sicherungseinrichtung (400) innerhalb der Durchgangsöffnung (314) des Befestigungsabschnitts (300) angeordnet ist.

4. Werkzeugmaschine nach Anspruch 3,
**dadurch gekennzeichnet, dass** der Befestigungsabschnitt (300) ein die ersten Formschlussmittel (312) aufweisenden Kopplungsteil (302) und einen vom Kopplungsteil (302) auskragenden Arm (304) aufweist, wobei der erste Endabschnitt (408) des Betätigungselements (402) fest mit dem Arm (304) koppelbar ist.

5. Werkzeugmaschine nach einem der Ansprüche 1 bis 4,
**dadurch gekennzeichnet, dass** das Haltesystem (1) ferner wenigstens eine mit dem Einführabschnitt (104) des Hakens (100) zusammenwirkende zweite Rasteinrichtung (700) mit zweiten Formschlussmitteln (710) zum Definieren einer Drehposition des Hakens (100) relativ zur Haltevorrichtung (10) umfasst und der Aufnahmeabschnitt (200) der Haltevorrichtung (10) wenigstens eine sich entlang einer Innenfläche (204) der Öffnung (202) des Aufnahmeabschnitts (200) axial erstreckende Vertiefung (214) aufweist, in welche die wenigstens eine zweite Rasteinrichtung (700) derart einsetzbar ist, dass die zweiten Formschlussmittel (710) der wenigstens einen zweiten Rasteinrichtung (700) mit an einer Außenseite (110) des in dem Aufnahmeabschnitt (200) eingesetzten Einführabschnitts (104) des Hakens (100) bereitgestellten zweiten Gegenformschlussmitteln (108) in Eingriff bringbar sind.

6. Werkzeugmaschine nach Anspruch 5,
**dadurch gekennzeichnet, dass** die wenigstens eine zweite Rasteinrichtung (700) einen ersten Schenkel (702) und einen zweiten Schenkel (704) aufweist, welche an einem ihrer Enden über einen Verbindungsabschnitt (706) miteinander verbunden sind, wobei ein dem Verbindungsabschnitt (706) gegenüberliegendes freies Ende (708) des ersten Schenkels (702) die zweiten Formschlussmittel (710) aufweist.

## Claims

1. Machine tool comprising a holding system (1) for holding the machine tool and comprising a holding apparatus (10) and a hook (100) having an insertion portion (104), wherein the insertion portion (104) of the hook (100) can be introduced into the receiving portion (200) of the holding apparatus (10), wherein the holding apparatus (10) comprises:
a fastening portion (300) for fastening the holding apparatus (10) to the machine tool housing (G),
a securing device (400) for securing the holding apparatus (10) on the machine tool housing (G),
and a receiving portion (200) which has an opening (202) and is intended for receiving and rotatably supporting an insertion portion (104) of the hook (100), wherein the receiving portion (200) defines an axial direction (X), and wherein the fastening portion (300) has first interlocking connection means (312) which are designed to engage with first mating interlocking connection means (F) provided on the machine tool housing (G), wherein the interlocking connection between the first interlocking connection means (312) and the first mating interlocking connection means (F) allows movement of the holding apparatus (10) in a sliding direction (E) and prevents movement perpendicular to the sliding direction (E), and the securing device (400) can be moved between an open position and a locked position, wherein the securing device (400) is designed to prevent the holding apparatus (10) from moving in the sliding direction (E) in the locked position and to allow said movement in the open position, and wherein the holding system (1) also comprises a first latching device (500) which interacts with the receiving portion (200) of the holding apparatus (10) and is intended for defining a rotational position of the hook (100) relative to the holding apparatus (10), wherein the first latching device (500) is designed such that it can be coupled to the insertion portion (104) of the hook (100) for rotation therewith, and wherein the first latching device (500) has at least one spring arrangement (510) and the receiving portion (200) has at least one depression (212), wherein the at least one spring arrangement (510) is designed to engage with the at least one depression (212) in the receiving portion (200).

2. Machine tool according to claim 1, **characterized in that** the first interlocking connection means (312) and the first mating interlocking connection means (F) form a dovetail joint.

3. Machine tool according to either claim 1 or claim 2, **characterized in that** the fastening portion (300) comprises a through-opening (314) and the securing device (400) comprises an actuation element (402), the actuation element (402) having a first end (406) and a first end portion (408) extending from the first end (406) and a second end (410) and a second end portion (412) extending from the second end (410), it being possible for the first end portion (408) of the actuation element (402) to be rigidly coupled to the holding apparatus (10) and the second end portion (412) of the actuation element (402) being designed to project into the through-opening (314) in the fastening portion (300), the second end (410) of the actuation element (402) protruding beyond the fastening portion (300) when the securing device (400) is in its locked position and being arranged within the through-opening (314) in the fastening portion (300) when the securing device (400) is in its open position.

4. Machine tool according to claim 3, **characterized in that** the fastening portion (300) comprises a coupling part (302) having the first interlocking connection means (312), and an arm (304) projecting from the coupling part (302), it being possible for the first end portion (408) of the actuation element (402) to be rigidly coupled to the arm (304).

5. Machine tool according to any of claims 1 to 4, **characterized in that** the holding system (1) further comprises at least one second latching device (700) which interacts with the insertion portion (104) of the hook (100) and comprises second interlocking connection means (710) for defining a rotational position of the hook (100) relative to the holding apparatus (10), and the receiving portion (200) of the holding apparatus (10) having at least one depression (214) which extends axially along an inner surface (204) of the opening (202) in the receiving portion (200) and into which the at least one second latching device (700) can be introduced such that the second interlocking connection means (710) of the at least one second latching device (700) can be brought into engagement with second mating interlocking connection means (108) provided on an outer face (110) of the insertion portion (104) of the hook (100) introduced in the receiving portion (200).

6. Machine tool according to claim 5, **characterized in that** the at least one second latching device (700) has a first leg (702) and a second leg (704) which are interconnected at one of their ends via a connecting portion (706), a free end (708) of the first leg (702) that is opposite the connecting portion (706) comprising the second interlocking connection means (710).

## Revendications

1. Machine-outil comportant un système de support (1) permettant de supporter la machine-outil au moyen d'un dispositif de support (10) et un crochet (100) présentant une section d'insertion (104), la section d'insertion (104) du crochet (100) pouvant être introduite dans la section de réception (200) du dispositif de support (10), le dispositif de support (10) comprenant :
une section de fixation (300) permettant de fixer le dispositif de support (10) au boîtier de machine-outil (G),
un appareil de sécurité (400) permettant de sécuriser le dispositif de support (10) au boîtier de machine-outil (G), et
une section de réception (200) présentant une ouverture (202) et permettant de recevoir et de monter en rotation une section d'insertion (104) du crochet (100), la section de réception (200) définissant une direction axiale (X), et la section de fixation (300) présentant des premiers moyens d'assemblage par complémentarité de forme (312), lesquels sont conçus pour venir en prise avec des premiers contre-moyens d'assemblage par complémentarité de forme (F) fournis au niveau du boîtier de machine-outil (G), la complémentarité de forme permettant un déplacement du dispositif de support (10) le long d'un sens de coulissement (E) entre les premiers moyens d'assemblage par complémentarité de forme (312) et les premiers contre-moyens d'assemblage par complémentarité de forme (F) et empêchant un déplacement perpendiculaire au sens de coulissement (E), et l'appareil de sécurité (400) étant mobile entre une position d'ouverture et une position d'encliquetage, l'appareil de sécurité (400) étant conçu pour empêcher un déplacement du dispositif de support (10) le long du sens de coulissement (E) dans la position d'encliquetage et pour le permettre dans la position d'ouverture, et le système de support (1) comprenant également un premier appareil de verrouillage (500) coopérant avec la section de réception (200) du dispositif de support (10) et permettant de définir une position de rotation du crochet (100) par rapport au dispositif de support (10), le premier appareil de verrouillage (500) étant conçu pour être accouplé de manière solidaire en rotation avec la section d'insertion (104) du crochet (100), et
le premier appareil de verrouillage (500) présentant au moins un agencement de ressort (510) et la section de réception (200) présentant au moins une cavité (212), l'au moins un agencement de ressort (510) étant conçu pour venir en prise avec l'au moins une cavité (212) dans la section de réception (200).

2. Machine-outil selon la revendication 1,
**caractérisée en ce que** les premiers moyens d'assemblage par complémentarité de forme (312) et les premiers contre-moyens d'assemblage par complémentarité de forme (F) forment une liaison en queue d'aronde.

3. Machine-outil selon la revendication 1 ou 2,
**caractérisée en ce que** la section de fixation (300) comprend une ouverture traversante (314) et l'appareil de sécurité (400) comprend un élément d'actionnement (402), l'élément d'actionnement (402) présentant une première extrémité (406) et une première section d'extrémité (408) s'étendant à partir de la première extrémité (406) ainsi qu'une seconde extrémité (410) et une seconde section d'extrémité (412) s'étendant à partir de la seconde extrémité (410), la première section d'extrémité (408) de l'élément d'actionnement (402) pouvant être accouplée de manière fixe au dispositif de support (10) et la seconde section d'extrémité (412) de l'élément d'actionnement (402) étant conçue pour faire saillie dans l'ouverture traversante (314) de la section de fixation (300), la seconde extrémité (410) de l'élément d'actionnement (402) faisant saillie, dans la position d'encliquetage de l'appareil de sécurité (400), au-delà de la section de fixation (300) et étant disposée, dans la position d'ouverture de l'appareil de sécurité (400), à l'intérieur de l'ouverture traversante (314) de la section de fixation (300).

4. Machine-outil selon la revendication 3,
**caractérisée en ce que** la section de fixation (300) présente une pièce d'accouplement (302) présentant les premiers moyens d'assemblage par complémentarité de forme (312) et un bras (304) faisant saillie de la pièce d'accouplement (302), la première section d'extrémité (408) de l'élément d'actionnement (402) pouvant être accouplée de manière fixe au bras (304).

5. Machine-outil selon l'une des revendications 1 à 4,
**caractérisée en ce que** le système de support (1) comprend en outre au moins un second appareil de verrouillage (700) coopérant avec la section d'insertion (104) du crochet (100) et comportant des seconds moyens d'assemblage par complémentarité de forme (710) permettant de définir une position de rotation du crochet (100) par rapport au dispositif de support (10) et que la section de réception (200) du dispositif de support (10) présente au moins une cavité (214) qui s'étend axialement le long d'une surface intérieure (204) de l'ouverture (202) de la section de réception (200) et dans laquelle peut être inséré l'au moins un second appareil de verrouillage (700) de telle manière que les seconds moyens d'assemblage par complémentarité de forme (710) de l'au moins un second appareil de verrouillage (700) peuvent venir en prise avec des seconds contre-moyens d'assemblage par complémentarité de forme (108) fournis au niveau d'un côté extérieur (110) de la section d'insertion (104) du crochet (100) insérée dans la section de réception (200).

6. Machine-outil selon la revendication 5,
**caractérisée en ce que** l'au moins un second appareil de verrouillage (700) présente une première jambe (702) et une seconde jambe (704), lesquelles sont reliées l'une à l'autre au niveau d'une de leurs extrémités par l'intermédiaire d'une section de liaison (706), une extrémité libre (708), opposée à la section de liaison (706), de la première jambe (702) présentant les seconds moyens d'assemblage par complémentarité de forme (710).
